# EUROPÄISCHE PATENTSCHRIFT

(11) **EP 1 405 554 B1**
(45) Veröffentlichungstag und Bekanntmachung des Hinweises auf die Patenterteilung: **11.05.2011**
(21) Anmeldenummer: 03021598.2
(22) Anmeldetag: 25.09.2003
(51) Int. Cl.: A01D 17/00, A01D 17/02, A01D 33/10

(54) **Selbstfahrende Rübenerntemaschine**
Self-propelled beet harvester
Machine de récolte pour tubercules automotrice

(30) Priorität: 02.10.2002 DE 10246254
(43) Veröffentlichungstag der Anmeldung: 07.04.2004
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Busse & Busse

(56) Entgegenhaltungen:
- EP-A- 0 189 017
- EP-A- 1 151 650
- BE-A- 831 709
- DE-A- 3 740 655
- DE-B- 1 215 988
- FR-A- 2 172 527
- FR-A- 2 533 798

## Beschreibung

Die Erfindung betrifft eine selbstfahrende Rübenerntemaschine in einer Ausbildung gemäß dem Oberbegriff des Anspruchs 1.

Bei bekannten Rübenerntemaschinen dieser Art (FR-A-2 533 798; DE 199 13 438) werden die mit einem vorderen Rodeaggregat erfaßten Rüben mit den Beimengungen über eine Siebbänder o. dgl. aufweisende Reinigungsstrecke gefördert, wobei diese zwischen jeweiligen Stützrädern eines vorderen Fahrwerkes verläuft und hier eine eine bodennahe Förderung bewirkende Teilstrecke bildet. Bei einer den vorderen Radabstand übersteigenden Bearbeitungsbreite, insbesondere bei mehrreihigem Erfassen von Zuckerrüben o. dgl., wird der als Gemisch aufgenommene Förderstrom im Bereich dieser zwischen den Stützrädern verlaufenden Teilstrecke in seiner Breite eingeengt. In diesem verengten Bereich können sich quer zur Förderrichtung festsetzende Beimengungen eine Verstopfung der Reinigungsstrecke verursachen und die daraus resultierenden Stillstandszeiten der Maschine beeinflussen deren Produktivität nachteilig.

Gemäß EP-A-1151650 A2 ist eine Erntemaschine gezeigt, bei der nur Kartoffeln unterhalb des Bunkers bis zu einem heckseitigen Förderer gelangen, hier umgelenkt und mit diesem aufwärts gefördert werden.

Die Erfindung befaßt sich mit dem Problem, eine Rübenerntemaschine zu schaffen, deren Aufnahme- und Trennleistung mit geringem technischem Aufwand erhöht ist, dabei das Maschinenkonzept einen langzeitig störungsfreien Durchlauf des Erntegutes gewährleistet und bei dessen schonender Trennung aus dem Förderstrom auch die Verarbeitung feuchter Gemische möglich ist.

Die Erfindung löst diese Aufgabe mit einer Rübenerntemaschine mit den Merkmalen des Anspruchs 1. Hinsichtlich weiterer Ausgestaltungen wird auf die Ansprüche 2 bis 16 verwiesen.

Die erfindungsgemäße Rübenerntemaschine weist mit der zwischen Aufnahmeaggregat und Sammelbunker im wesentlichen linear aufsteigenden und sich mit gleichbleibender Breite erstreckenden Aufnahme-, Trenn- und Übergabeeinheit eine an unterschiedliche Maschinenkonzepte anpaßbare Baugruppe auf. Diese Funktionseinheit ermöglicht mit hoher Förderleistung und im wesentlichen ohne sich in Förderrichtung ändernde Durchlaßbedingungen eine optimale Trennung der Beimengungen vom Erntegut, wobei dessen schonende Weitergabe bis in einen Sammelbunker gewährleistet ist.

Mit diesem erfindungsgemäßen Grundkonzept ist eine Rübenerntemaschine geschaffen, bei der durch optimale räumliche Aufteilung an sich bekannter Maschinenbaugruppen und eine Integration der Förderbaugruppen in den Fahrzeugrahmen mit geringem Aufwand ein weitgehend linearer Gutstrom erzeugt wird, der eine effiziente Reinigung und Trennung der Rüben ermöglicht. Die eine kurze Bauweise der Maschine begünstigende Schrägförderung des Erntegutes bis in den oberen Einlaßbereich des Bunkers erfolgt über eine in der Größe maximal ausgelegte Reinigungs- und Trennfläche, es treten keine Leistungsverluste durch sich stauende Gemischlagen auf und deren Verlagerung erfolgt auch bei feuchten Bestandteilen ohne Umlenkungen in einer gleichmäßigen Förderrichtung störungssicher.

Die die Förderstrecke bildende Baueinheit ist dabei durch den Fahrzeugrahmen oberhalb dessen vorderen Fahrwerkes so abgestützt, daß unter Ausnutzung der Maschinenbreite eine maximale, mehrreihige Aufnahme der Rüben-Beimengungen-Gemische erreichbar ist. Die sich an das Rodeaggregat anschließende Förder- und Trennstrecke weist keine "Flaschenhalseffekte" verursachende Verengungen auf, so daß das Gemisch in einem in Querrichtung weitgehend unbeeinflußten Förderstrom optimal verlagert und aus diesem die Beimengungen nach unten getrennt werden. Damit sind die Einsatzbreite und die Durchsatzleistung der Maschine vorteilhaft erhöht, die Qualität des Trennprozesses ist wesentlich verbessert und eine Verstopfung der Förderstrecke bewirkende seitliche Pressungen des insbesondere feuchte, klumpige Beimengungen enthaltenden Förderstromes sind vermieden.

Die für die Steuerung der Maschine vorgesehene Fahrerkabine ist in zweckmäßiger Ausführung unmittelbar oberhalb der schräg nach oben zum Randbereich des Sammelbunkers verlaufenden Förderstrecke an der Vorderseite des Fahrgestellrahmens so gehalten, daß die Aufnahme des Gemisches am Rodeaggregat, die Einförderung des Erntegutes in die Reinigungs- und Trennstrecke und die Übergabe der vereinzelten Rüben in den Sammelbunker übersichtlich erfaßt und der Trennprozeß kontrolliert werden.

Weitere Einzelheiten und vorteilhafte Ausgestaltungen der Erfindung ergeben sich aus der nachfolgenden Beschreibung und der Zeichnung, in der ein Ausführungsbeispiel der erfindungsgemäßen Rübenerntemaschine näher veranschaulicht ist. In der Zeichnung zeigen:
- Fig. 1: eine Perspektivdarstellung der erfindungsgemäßen Rübenerntemaschine,
- Fig. 2: eine Seitenansicht der Rübenerntemaschine gemäß Fig. 1,
- Fig. 3: eine Draufsicht der Rübenerntemaschine gemäß Fig. 1,
- Fig. 4: eine Vorderansicht (ohne Fahrerhaus) der Rübenerntemaschine gemäß Fig. 3,
- Fig. 5: eine Vorderansicht der Rübenerntemaschine ähnlich Fig. 4 mit einer zweiten Ausführung einer Förderstrecke,
- Fig. 6: eine vergrößerte Einzeldarstellung des Fahrgestellrahmens der Rübenerntemaschine gemäß Fig. 1,
- Fig. 7: eine Draufsicht des Fahrgestellrahmens gemäß Fig. 6,
- Fig. 8: eine Draufsicht ähnlich Fig. 7 mit einer zweiten Ausführung des Fahrgestellrahmens, und
- Fig. 9 bis Fig. 12: jeweilige Prinzipdarstellungen unterschiedlicher Rad- bzw. Walzenpaarungen am Fahrgestellrahmen.

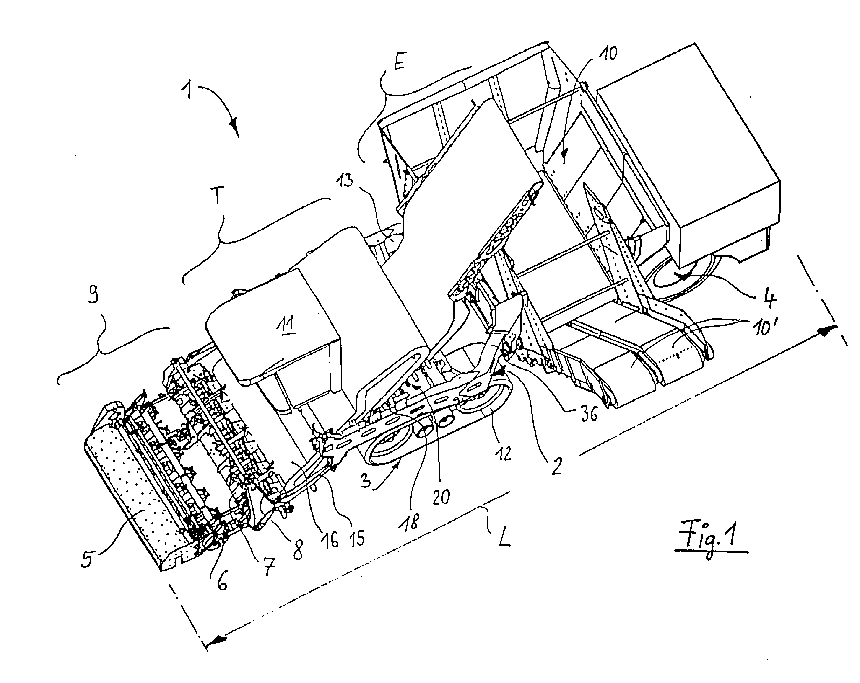

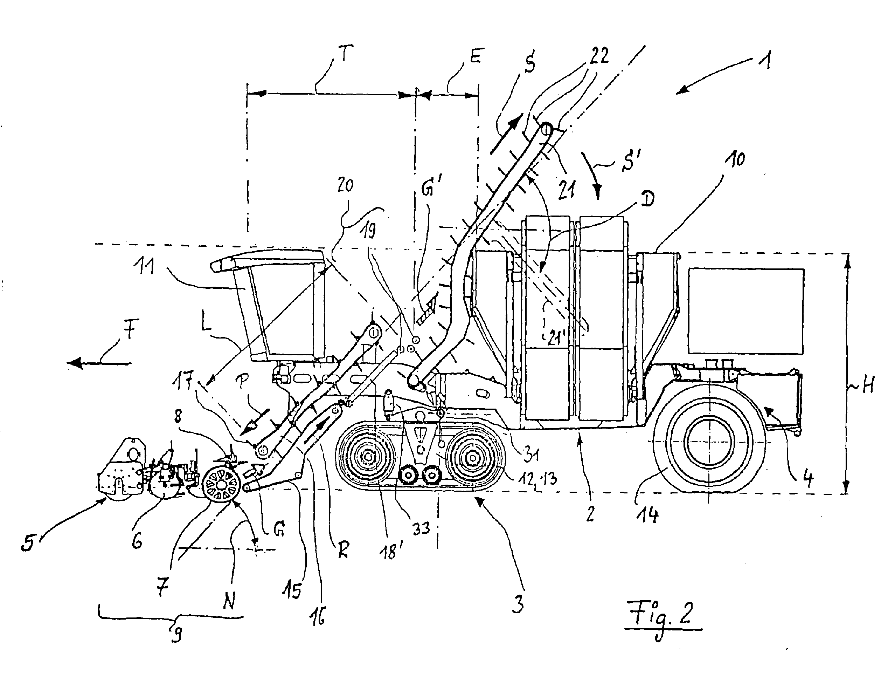

In Fig. 1 ist eine insgesamt mit 1 bezeichnete Rübenerntemaschine dargestellt, deren Fahrzeugrahmen 2 bodenseitig über ein vorderes und ein hinteres Fahrwerk 3, 4 abgestützt ist. An diesem Fahrzeugrahmen 2 ist ein das nicht näher dargestellte Erntegut mit Beimengungen als ein Gemischstrom G erfassendes Rodeaggregat 9 vorgesehen, das einen Krautschläger 5, ein Tiefenführungsrad 6, Rodescharen bzw. -räder 7 und einen zwischen diese eingreifenden Ausputzer 8 als wesentliche Baugruppen aufweist. Ausgehend von diesem Rodeaggregat 9 ist diesem in Förderrichtung eine den Gemischstrom G erfassende Trennstrecke T und eine das separierte Erntegut in einen Sammelbunker 10 einfördernde Übergabestrecke E zugeordnet (Fig. 2).

Die erfindungsgemäße selbstfahrende Rübenerntemaschine 1 verwirklicht ein Maschinenkonzept, bei dem der vom Rodeaggregat 9 aufgenommene Gemischstrom G auf direktem Wege im Bereich der Trenn- und Übergabestrecke T, E verengungsfrei und breitflächig aufnehmbar und verlagerbar ist. Gleichzeitig sind die Trenn- und Übergabestrecke T, E in ein neues Anordnungs-Konzept mit Fahrzeugrahmen 2 und Sammelbunker 10 so integriert, daß zumindest das separierte Erntegut umlenkungsfrei und schonend verlagerbar bis an den Sammelbunker 10 herangeführt werden kann.

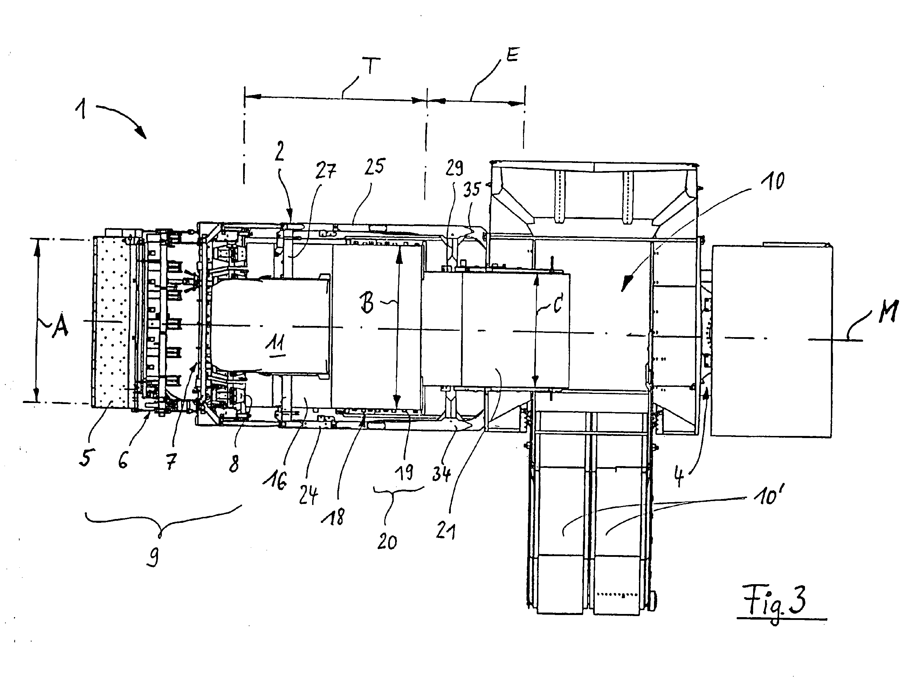

Die Draufsicht der Rübenerntemaschine 1 gemäß Fig. 3 verdeutlicht, daß die aus Trenn- und Übergabestrecke T, E gebildeten Teilbereiche mit im wesentlichen gleichbleibender Transportbreite ausgebildet sind. Ausgehend vom Rodeaggregat 9 ist eine Aufnahmebreite A zur mehrreihigen, insbesondere 6-reihigen Erfassung von Rüben vorgesehen und diese Aufnahmebreite A setzt sich als gleichbemessene Transportbreite B auf der Trennstrecke T fort. Denkbar ist dabei auch, daß die Aufnahmebreite weniger als sechs Rübenreihen erfaßt oder eine 9- bzw. 12-reihige Aufnahme des Erntegutes vorgesehen ist (nicht dargestellt).

Mit dieser Ausbildung der Trennstrecke T ist gewährleistet, daß auch bei Aufnahme eines großvolumige und klebrige Beimengungen enthaltenden Gemischstromes G dessen Konsistenz durch eine verengungsfreie Weiterförderung auf T zunehmend aufgelockert wird, zu Verklebungen neigende Bodenbestandteile nicht durch eine Pressung quer zur Längsmittelebene M an seitliche Begrenzungsflächen gedrückt werden und damit auf diesem in seiner Länge L (Fig. 2) variablen Teilbereich T der Separierungsstrecke Verstopfungen vermieden sind.

Durch einen in einer Fahrerkabine 11 befindlichen Fahrer der Rübenerntemaschine 1 ist eine einfache und schnelle Kontrolle des Förderstromes G möglich, dieser kann im Bereich des Rodeaggregates optimal an wechselnde Aufnahmevolumen 9 angepaßt werden und durch den verengungsfreien und breitflächigen Trennvorgang ist die Aufnahmeleistung der Maschine 1 vorteilhaft erhöht. Dabei können bei insbesondere konstantem Neigungswinkel N der Strecke T (Fig. 2) die Vorschubgeschwindigkeiten (Pfeil R) eines als Siebband 15 ausgebildeten Reinigungsbandes und eines oberen Deckbandes 16 mit Mitnehmern 17 (Bewegungspfeil P) gesteuert und variabel an die Arbeitsbedingungen und Bodenverhältnisse angepaßt werden. In jedem Fall ist ein Zurückbewegen von Gemischteilen auf der Schräge N im Wirkungsbereich der beiden Bänder 15 und 16 sicher vermieden.

Anschließend an diese optimale Gemischstromführung ist nachfolgend dem Bereich der Trennstrecke T die Übergabestrecke E weitgehend umlenkungsfrei so zugeordnet, daß ein stetig aufsteigender Förderstrom G' mit in dieser Phase separierten Rüben weitergegeben wird. Bedingt durch den am Ende der Teilstrecke T weitgehend abgeschlossenen Trennvorgang und die hier einzeln zugeförderten Rüben kann die breitflächig verlaufende Trennfläche T (Breite: B = 3m) vorteilhaft auf ein geringeres Breitenmaß C (Fig. 3) verjüngt werden und die Übergabestrecke E in Form eines als Befüllband vorgesehenen Bandes 21 bis zum Sammelbunker 10 geführt werden.

Sämtliche der vorbeschriebenen Baugruppen zur Separierung des Gemisches sind vor dem Bereich des Sammelbunkers 10 so angeordnet, daß sich die Trenn- und Übergabestrecken T und E im wesentlichen oberhalb des vorderen Fahrwerkes 3 des Fahrzeugrahmens 2 erstrecken und damit durch die Neigung N dieses Förderbereiches eine optimale Ausbildung der Rübenerntemaschine 1 in ihrer Längen- und Höhenabmessung L (Fig. 1) bzw. H (Fig. 2) gewährleistet ist. Die Übergabestrecke E erstreckt sich dabei unmittelbar vor dem Sammelbunker 10 und dieser ist zwischen dem vorderen Fahrwerk 3 und dem hinteren Fahrwerk 4 am Fahrzeugrahmen 2 festgelegt.

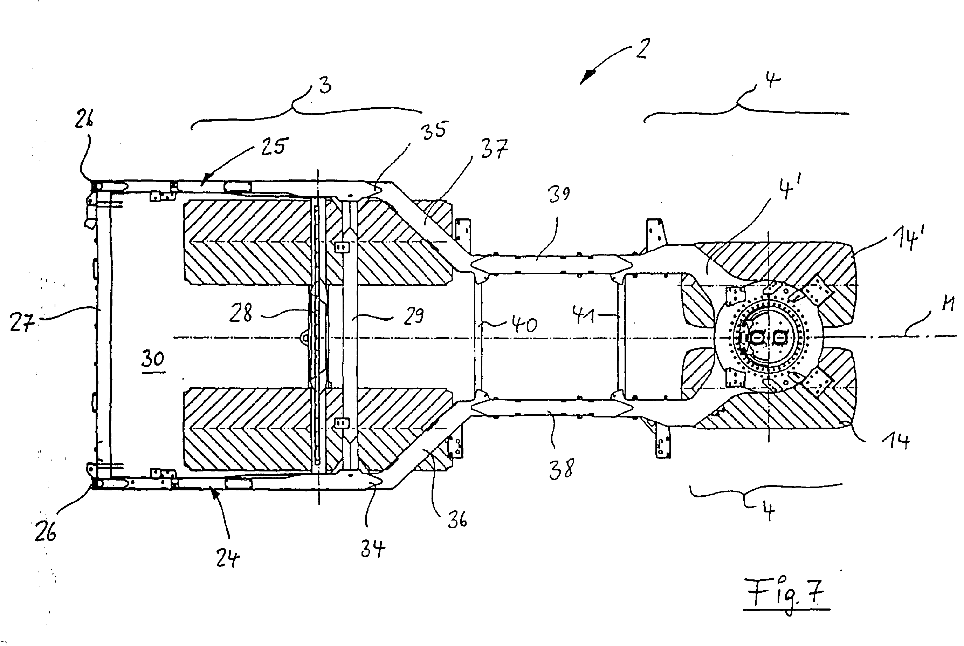

Das vordere Fahrwerk 3 weist sich im wesentlichen randseitig unter der Übergabestrecke E erstreckende Antriebsräder 12 und 13 auf, so daß die im Bereich der Trennstrecke T zum Boden hin ausgeschiedenen Beimengungen im wesentlichen frei fallend vor dem Fahrwerk 3 auf dem Boden abgelegt werden. In Zusammenschau mit Fig. 7 wird deutlich, daß das hintere Fahrwerk 4 ein Steuerungskonzept mit zumindest einem lenkbaren Rad 14 aufweist, wobei in der gemäß Fig. 7 dargestellten Ausführung auch zwei Lenkräder 14 und 14' im Bereich der Längsmittelebene M gegenüberliegend angeordnet sein können.

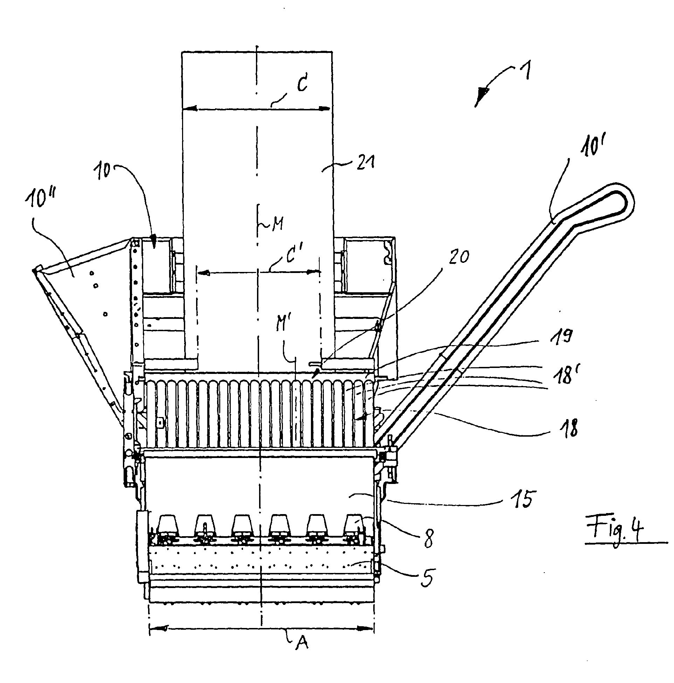

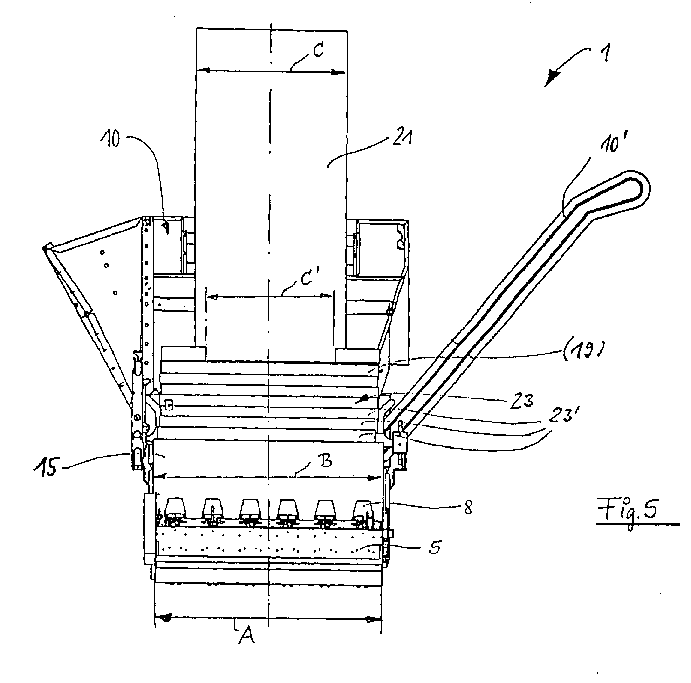

In Fig. 4 und 5 ist die Rübenerntemaschine 1 in jeweiligen Vorderansichten ohne die Fahrerkabine 11 und das Deckband 16 dargestellt. Die als Reinigungssektion wirksame Trennstrecke T weist das untere Siebband 15 auf, das mit dem darüber verlaufenden Deckband 16 abgedeckt ist. Dieses Band 16 ist mit mehreren bei der Trennung die Weitergabe von Rüben verbessernden Mitnehmern 17 (Fig. 2) versehen. An dieses Siebband 15 schließt sich in der Ausführung gemäß Fig. 4 ein Walzenförderer 18 an, dessen in Förderrichtung R entsprechend der Neigung N verlaufende Bauteile in Form von Walzen 18' parallel zur Längsmittelebene M ausgerichtete Längsachsen M' aufweisen (Fig. 2, Fig. 4). Mit jeweiligen daran in Form von Schneckenwalzen anschließenden Querwalzen 19 (Fig. 2) kann das separierte Erntegut auf einer kurzen Querwalzenstrecke 20 quer zur Mittellängsebene M hin verlagert werden, so daß die einzelnen Rüben für den Weitertransport auf einen Durchlaßbereich mit der Breite C' verdichtet sind. Danach werden die Rüben auf der Übergabestrecke E als einlagiger Förderstrom (Breite C = 2m) erfaßt, durch jeweilige Mitnehmer 22 (Fig. 2) des als Befüllband vorgesehenen Übergabebandes 21 transportiert (Pfeil S) und in den Sammelbunker 10 eingeworfen (Pfeil S').

In der Ausführungsform gemäß Fig. 5 ist ein Walzenförderer 23 vorgesehen, der vollständig aus jeweiligen Querwalzen 23' aufgebaut ist, so daß jeweilige bereits in Fig. 2 dargestellte Querwalzen 19 endseitig dieser Teilstrecke in dieses Querwalzen-System so integriert sind, daß am Ende der Querwalzen-Strecke 20 (bei 19) die Durchlaßbreite C' für die einzelnen Rüben erreichbar ist und die Befüllung des schmaleren Übergabebandes 21 im Bereich jeweiliger Mitnehmer 22 (Fig. 2) erfolgt.

Das Übergabeband 21 ist im Nahbereich des Sammelbunkers 10 als schwenkbare Einheit (Strichdarstellung in Fig. 2) ausgebildet, so daß ein Teilbereich 21' des Übergabebandes 21 entsprechend dem Füllstand des Sammelbunkers 10 in diesen hinein- bzw. aus diesem herausgeschwenkt werden kann (Pfeil D, Fig. 2). Der Sammelbunker 10 weist in der dargestellten Ausführung einen seitlich angeordneten Ausförderer 10' auf und andererseits kann der Sammelbunker 10 durch ausklappbare Wandteile 10" in seinem Aufnahmevolumen vergrößert werden.

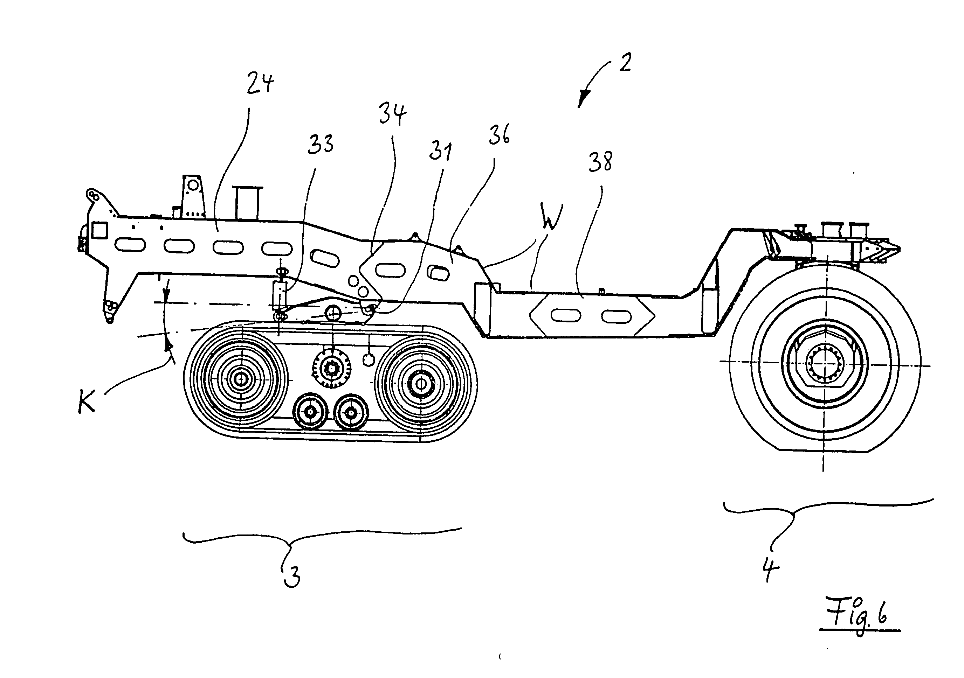

In Fig. 6 ist der Fahrzeugrahmen 2 in einer Einzeldarstellung veranschaulicht, wobei in Zusammenschau mit Fig. 7 deutlich wird, daß der Fahrzeugrahmen 2 im Bereich des vorderen Fahrwerkes 3 zwei zur Mittellängsebene M parallele äußere Tragstreben 24 und 25 aufweist, die einen durch Querträger ausgesteiften Doppel-Zentralrahmen bilden. Diesem Fahrzeugrahmen 2 ist im Bereich der vorderen Stirnseiten 26 als Querträger ein die Fahrerkabine 11 (Fig. 2) untergreifendes Tragrohr 27 zugeordnet. Von diesem ausgehend ist zum Bereich einer vorderen Querachse 28 des Fahrwerkes 3 bzw. zu einer in deren Nahbereich verlaufenden Mittelquerstrebe 29 des Fahrzeugrahmens 2 hin ein Freiraum 30 gebildet, der von den schräg verlaufenden Baugruppen der Trenn- und Übergabestrecke T, E durchgriffen ist (Fig. 2).

Der Fahrzeugrahmen 2 ist im Bereich des vorderen Fahrwerkes 3 mit jeweiligen dieses randseitig mit den äußeren Tragstreben 24 und 25 verbindenden Stützgelenken 31 (bzw. 32, in Fig. 2 nicht sichtbar) versehen, mit denen ein vorgeordnetes Federelement 33 (Fig. 6) zwischen Fahrzeugrahmen 2 und Fahrwerk 3 zusammenwirkt. Diese gelenkige Verbindung des Fahrzeugrahmens 2 ermöglicht eine Kippung des Fahrzeugrahmens 2 um einen Kippwinkel K, so daß während des Erntevorganges bzw. bei einer Straßenfahrt eine Neigungsanpassung der Räder möglich ist.

Die Draufsicht gemäß Fig. 7 verdeutlicht, daß der Fahrzeugrahmen 2 im Bereich hinter der den vorderen Freiraum 30 begrenzenden Mittelquerstrebe 29 mit den äußeren Tragstreben 24 und 25 in Verbindungsbereichen 34 bzw. 35 verbundenen und jeweils zur Mittellängsebene M spitzwinklig nach innen geneigten Strebenteilen 36 und 37 versehen. Diese gehen in parallel zum hinteren Fahrwerk 4 hin verlaufende Längsstreben 38 und 39 über, wobei zwischen diesen unterhalb des Sammelbunkers 10 verlaufende Querstreben 40, 41 vorgesehen sind und die Längsstreben 38 und 39 mit einer hinteren Lenkgabel 4' des zur Steuerung schwenkbaren Fahrwerkes 4 verbunden sind.

Der Fahrzeugrahmen 2 ist in seiner Längskontur (Fig. 6) so gestaltet, daß im Bereich zwischen dem vorderen und hinteren Fahrwerk 3, 4 eine bodenseitig abgesenkte Kontur W durch die Strebenteile 38 bzw. 39 gebildet ist. Damit wird durch einen tiefliegenden Schwerpunkt des Sammelbunkers 10 eine optimale Gewichtsverteilung erreicht und das Transportvolumen des Sammelbunkers 10 ist vorteilhaft vergrößert.

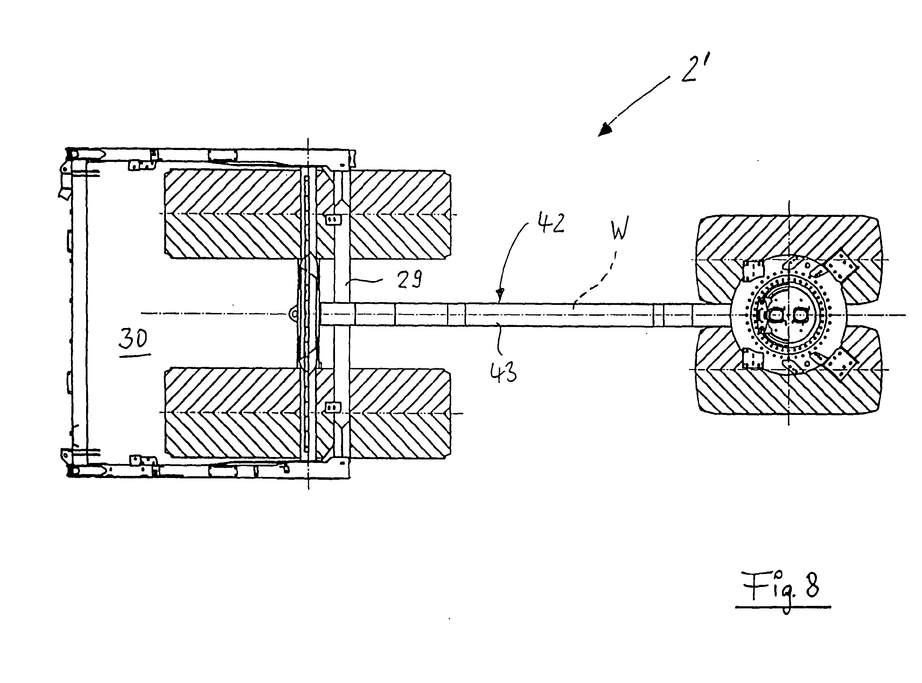

In Fig. 8 ist der Fahrzeugrahmen 2' in einer zweiten Ausführung dargestellt, wobei dieser anschließend an die den Freiraum 30 begrenzende Mittelquerstrebe 29 einen einteiligen Zentralrahmenteil 42 aufweist, der entsprechend dem in Fig. 6 dargestellten Längsprofil W konturiert ist und im wesentlichen als einteiliger Längsträger 43 verläuft. Die für die Durchführung der Förderstrecke T, E erforderliche Freiraumgestaltung im Bereich 30 vor dem vorderen Fahrwerk 3 ist auch bei dieser Ausführungsform verwirklicht, so daß sich die Anordnung der in Fig. 7 dargestellten Streben und Stützteile entsprechend ergibt.

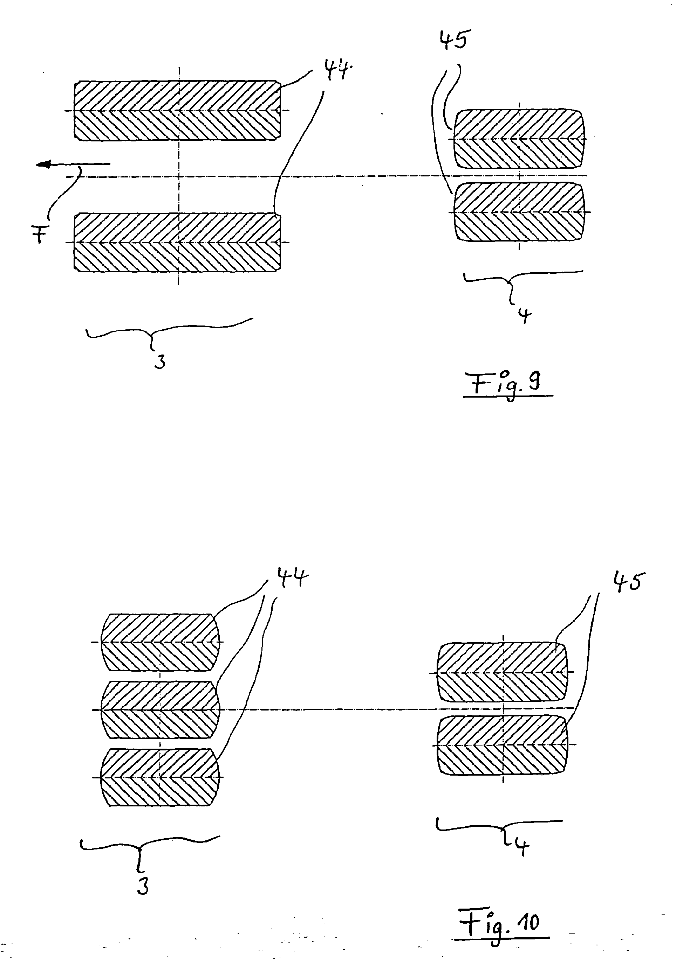

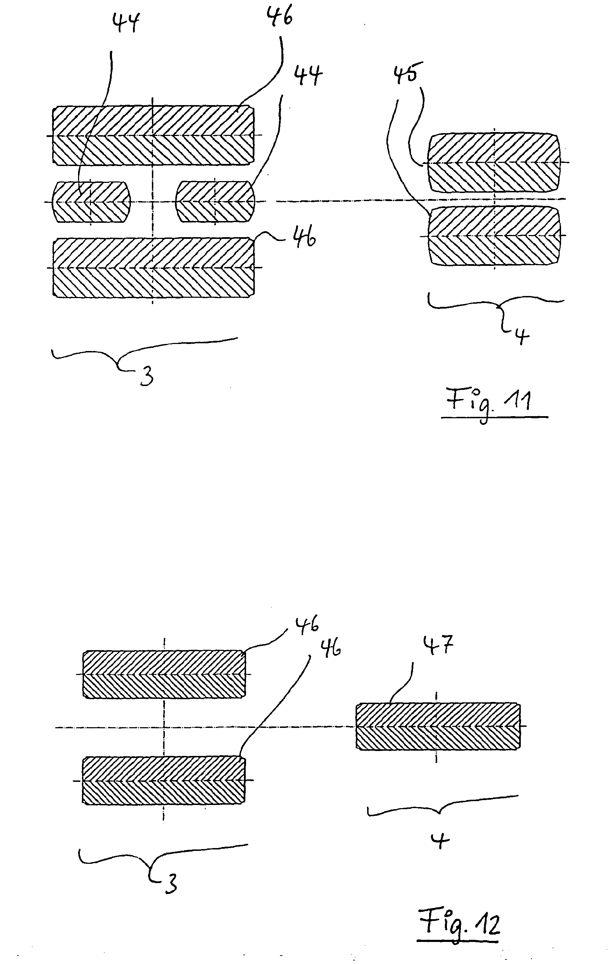

In den Darstellungen gemäß Fig. 9 bis 12 sind jeweilige am nicht näher dargestellten Fahrzeugrahmen 2 bzw. 2' vorgesehenen Stützräder 44, 45 und/oder Stützraupen 46, 47 in verschiedenen Varianten dargestellt, die an jeweilige unterschiedliche Bedingungen für die bodenseitige Aufnahme bzw. den Eintrag des Gesamtgewichtes der Rübenerntemaschine 1 vorgesehen sind. In Fig. 9 ist eine der Rad-Variante gemäß Fig. 7 entsprechende Anordnung mit jeweils zwei Rädern 44 und 45 an den Fahrwerken 3 und 4 dargestellt, in Fig. 10 weist das vordere Fahrwerk 3 drei Stützräder 44 mit geringerem Durchmesser als in Fig. 9 auf und in Fig. 11 sind zwei mittig hintereinander angeordnete vordere Stützräder 44 mit zwei äußeren Stützraupen 46 kombiniert. In Fig. 12 ist das hintere Fahrwerk 4 mit nur einer Stützraupe 47 versehen, die in Fahrtrichtung F im wesentlichen zwischen den beiden Fahrspuren zweier vorderer Stützwalzen 46 abrollbar ist.

Die vorbeschriebene Ausführung der Rübenerntemaschine 1 mit Trenn- und Übergabestrecke T, E kann in einer nicht näher dargestellten Ausführung auch so gestaltet sein, daß die Position des Sammelbunkers 10 auf dem Fahrzeugrahmen 2 verändert ist und die Transportbänder 15, 16, 20 und/oder 22 zumindest bereichsweise unter einem entsprechend veränderten Bunker (nicht dargestellt) hindurchgeführt sind, so daß der Gutstrom von dessen Rückseite aus in den Sammelraum eingefördert werden kann.

## Patentansprüche

1. Selbstfahrende Rübenerntemaschine, mit einem ein vorderes und ein hinteres Fahrwerk (3, 4) aufweisenden Fahrzeugrahmen (2), an dem ein das Erntegut mit Beimengungen als Gemischstrom (G) erfassendes Rodeaggregat (9), eine diesem in Förderrichtung nachgeordnet den Gemischstrom (G) erfassende Trennstrecke (T) und eine von dieser das separierte Erntegut in einen Sammelbunker (10) o. dgl. einfördernde Übergabeeinheit vorgesehen sind, **dadurch gekennzeichnet, daß** der vom Rodeaggregat (9) aufgenommene Gemischstrom (G) im Bereich einer verengungsfreien Trennstrecke (T) und einer verengungsfreien Übergabestrecke (E) breitflächig verlagerbar und auf dieser das Erntegut (G') umlenkungsfrei bis an den Sammelbunker (10) heranführbar ist, wobei die aus Trenn- und Übergabestrecke (T, E) gebildeten Teilbereiche mit im wesentlichen gleichbleibender Transportbreite (B,C) ausgebildet sind.

2. Rübenerntemaschine nach Anspruch 1, **dadurch gekennzeichnet, daß** zumindest die Trennstrecke (T) eine der insbesondere 6-reihigen Aufnahmebreite (A) des Rodeaggregates (9) entsprechende Transportbreite (B) aufweist.

3. Rübenerntemaschine nach Anspruch 1 oder 2, **dadurch gekennzeichnet, daß** die Trenn- und Übergabestrecke (T, E) ausgehend von der Übernahmeebene stetig aufsteigend (Neigung N) verlaufen und im wesentlichen vor dem Bereich des Sammelbunkers (10) angeordnet sind.

4. Rübenerntemaschine nach einem der Ansprüche 1 bis 3, **dadurch gekennzeichnet, daß** sich die Trenn- und Übergabestrecke (T, E) im wesentlichen oberhalb eines vorderen Fahrwerkes (3) des Fahrzeugrahmens (2; 2') erstrecken und dabei die Übergabestrecke (E) unmittelbar vor dem Sammelbunker (10) angeordnet ist.

5. Rübenerntemaschine nach Anspruch 4, **dadurch gekennzeichnet, daß** der Sammelbunker (10) zwischen dem vorderen Fahrwerk (3) und hinteren Fahrwerk (4) am Fahrzeugrahmen (2, 2') festgelegt ist.

6. Rübenerntemaschine nach einem der Ansprüche 1 bis 5, **dadurch gekennzeichnet, daß** die zumindest zwei vorderen Antriebsräder (12, 13; 44) des Fahrwerkes (3) randseitig unter der Übergabestrecke (E) verlaufen und das zumindest eine am hinteren Fahrwerk (4) vorgesehene Lenkrad (45; 47) am Fahrzeugrahmen (2) im Bereich dessen Längsmittelebene (M) gelagert ist.

7. Rübenerntemaschine nach einem der Ansprüche 1 bis 6, **dadurch gekennzeichnet, daß** diese (1) eine oberhalb der stetig aufsteigenden Trennstrecke (T) am Fahrzeugrahmen (2; 2') abgestützte Fahrerkabine (11) aufweist.

8. Rübenerntemaschine nach einem der Ansprüche 1 bis 7, **dadurch gekennzeichnet, daß** der Fahrzeugrahmen (2; 2') als ein zumindest im Bereich des vorderen Fahrwerkes (3) zwei parallele äußere Tragstreben (24, 25) aufweisender und durch Querträger (27, 29, 40, 41) ausgesteifter Doppel-Zentralrahmen ausgebildet ist.

9. Rübenerntemaschine nach einem der Ansprüche 1 bis 8, **dadurch gekennzeichnet, daß** der Fahrzeugrahmen (2; 2') an seiner vorderen Stirnseite (26) als Querträger ein die Fahrerkabine (11) untergreifendes Tragrohr (27) aufweist, wobei zwischen diesem und einer im Bereich der Querachse (28) des vorderen Fahrwerkes (3) verlaufenden Mittelquerstrebe (29) ein von der Trenn- und Übergabestrecke (T, E) durchgriffener Freiraum (30) gebildet ist.

10. Rübenerntemaschine nach der Anspruch 8 oder 9, **dadurch gekennzeichnet, daß** der Fahrzeugrahmen (2; 2') im Bereich des vorderen Fahrwerkes (3) jeweilige dieses randseitig mit den äußeren Tragstreben verbindende Stützgelenke (31, 32) aufweist und diesen vorgeordnet ein Federelement (33) zwischen Fahrzeugrahmen (2) und Fahrwerk (3) angelenkt ist.

11. Rübenerntemaschine nach einem der Ansprüche 8 bis 10, **dadurch gekennzeichnet, daß** der Fahrzeugrahmen (2) im Bereich hinter der den vorderen Freiraum (30) begrenzenden Mittelquerstrebe (29) mit den äußeren Tragstreben (24, 25) verbundene und jeweils zur Mittellängsebene (M) spitzwinklig nach innen geneigte Strebenteile (36, 37) aufweist, die in parallel zum hinteren Fahrwerk (4) hin verlaufende Längsstrebenteile (38, 39) übergehen.

12. Rübenerntemaschine nach einem der Ansprüche 1 bis 11, **dadurch gekennzeichnet, daß** die am Fahrgestellrahmen (2) vorgesehenen Stützräder (44, 45) und/oder Stützraupen (12, 13; 46, 47) der Fahrwerke (3,4) eine Parallel- und/oder Hintereinanderanordnung aufweisen, durch die das Maschinengewicht optimal im Boden verteilt wird.

13. Rübenerntemaschine nach einem der Ansprüche 1 bis 12, **dadurch gekennzeichnet, daß** das hintere Fahrwerk (4) im Bereich der durch eine Lenkgabel (4') zusammengeführten hinteren Längsstrebenteile (38, 39) ein mittleres Stützrad (47) aufweist, das in Fahrtrichtung (F) im wesentlichen zwischen den beiden Fahrspuren der vorderen Stützräder (44, 46) abrollbar ist.

14. Rübenerntemaschine nach einem der Ansprüche 1 bis 13, **dadurch gekennzeichnet, daß** an den beiden Fahrwerken (3, 4) des Fahrgestells (2) zwei oder mehr Räder (44, 45) bzw. Raupen (46, 47) vorgesehen sind.

15. Rübenerntemaschine nach einem der Ansprüche 1 bis 14, **dadurch gekennzeichnet, daß** der Fahrgestellrahmen (2) im Bereich der zwischen vorderem und hinterem Fahrwerk (3, 4) vorgesehenen Längsstrebenteile (38; 43) eine bodenseitig abgesenkte Kontur (W) aufweist.

16. Rübenerntemaschine nach einem der Ansprüche 1 bis 15, **dadurch gekennzeichnet, daß** die Trenn- und Übergabestrecke (T, E) unter dem Sammelbunker (10) verläuft und am Ende der Übergabestrecke (E) das umlenleungsfrei herangeführte Erntegut umgelenkt in den Bunker (10) einführbar ist.

## Claims

1. Self-propelled beet harvester, having a chassis (2) which has a front and a rear running-gear unit (3, 4) and on which are provided a lifting assembly (9) which picks up the harvested crop plus any trash as a mixed flow (G), a separating section (T) which is positioned downstream of the latter in the direction of feed and which receives the mixed flow (G), and a transfer unit which feeds the harvested crop which has been separated by the latter into a collecting hopper (10) or the like, **characterised in that** the mixed flow (G) which is received from the lifting assembly (9) can be spread over a wide area in the region of a separating section (T) which is free of constrictions and a transfer section (E) which is free of constrictions and the harvested crop (G') can be fed up on the latter as far as the collecting hopper (10) without having its direction changed, the sub-regions formed by the separating and transfer sections (T, E) being formed to be of substantially constant transporting widths (B, C).

2. Beet harvester according to claim 1, **characterised in that** at least the separating section (T) is of a transporting width (B) corresponding to the pick-up width (A) of the lifting assembly (9), which is in particular a six-row width.

3. Beet harvester according to claim 1 or 2, **characterised in that**, starting from the plane in which material is passed over to them, the separating and transfer sections (T, E) extend at a steady upward inclination (an inclination N) and are arranged substantially upstream of the region occupied by the collecting hopper (10).

4. Beet harvester according to one of claims 1 to 3, **characterised in that** the separating and transfer sections (T, E) extend substantially above a front running-gear unit (3) on the chassis (2, 2') of the harvester and the transfer section (E) is arranged immediately upstream of the collecting hopper (10) in this case.

5. Beet harvester according to claim 4, **characterised in that** the collecting hopper (10) is fixed to the chassis (2, 2') of the harvester between the front running-gear unit (3) and the rear running-gear unit (4).

6. Beet harvester according to one of claims 1 to 5, **characterised in that** the at least two front drive wheels 12, 13; 44) of the running-gear unit (3) extend below the edge of the transfer section (E) and the at least one steerable wheel (45, 47) which is provided at the rear running-gear unit (4) is mounted on the chassis (2) of the harvester in the region of the longitudinal centre plane (M) thereof.

7. Beet harvester according to one of claims 1 to 6, **characterised in that** it (1) has a driver's cab (11) which is supported on the chassis (2, 2') of the harvester above the separating section (T) which is at the steady upward inclination.

8. Beet harvester according to one of claims 1 to 7, **characterised in that** the chassis (2, 2') of the harvester takes the form of a twin central chassis which is stiffened by transverse beams (27, 29, 40, 41) and which has two parallel outer supporting girders (24, 25) at least in the region of the front running-gear unit (3).

9. Beet harvester according to one of claims 1 to 8, **characterised in that** the chassis (2, 2') of the harvester has at its front end (26), as a transverse beam, a supporting tube (27) which fits under the driver's cab (11), and there is formed between the said supporting tube (27) and a central transverse beam (29) which extends in the region of the transverse axis (28) of the front running-gear unit (3) a clear space (30) through which the separating and transfer sections (T, E) pass.

10. Beet harvester according to claim 8 or 9, **characterised in that** the chassis (2, 2') of the harvester has, in the region of the front running-gear unit (3) respective supporting joints (31, 32) which connect the edges of the front running-gear unit (3) to the outer supporting girders and, at a point in front of the supporting joints (31, 32), a resilient member (33) is connected between the chassis (2) of the harvester and the running-gear unit (3) by joints.

11. Beet harvester according to one of claims 8 to 10, **characterised in that** the chassis (2) of the harvester has, in the region behind the central transverse beam (29) which forms a boundary of the clear space (30) at the front, girder members (36, 37) which are connected to the outer supporting girders (24, 25) and which are each inclined inwards at an acute angle to the longitudinal centre plane (M) and which merge into longitudinal girder members (38, 39) which extend in parallel towards the rear running-gear unit (4).

12. Beet harvester according to one of claims 1 to 11, **characterised in that** the supporting wheels (44, 45) and/or supporting tracks (12, 13; 46, 47) which belong to the track-laying units (3, 4) and are provided on the chassis (2) of the harvester are arranged in parallel and/or one behind the other, by which arrangement the weight of the machine is distributed in the optimum way on the ground.

13. Beet harvester according to one of claims 1 to 12, **characterised in that** the rear running-gear unit (4) has, in the region of the rear longitudinal girder members (38, 39) which are joined together by a yoke (4') for steering purposes, a central supporting wheel (47) which, in the direction of travel (F), is able to roll substantially between the two tracks followed by the front supporting wheels (44, 46).

14. Beet harvester according to one of claims 1 to 13, **characterised in that** two or more wheels (44, 45) or tracks (46, 47) are provided on the two running-gear units (3, 4) of the chassis (2).

15. Beet harvester according to one of claims 1 to 14, **characterised in that** the chassis (2) has, in the region of the longitudinal girder members (38, 43) which are provided between the front and rear running-gear units (3, 4), an outline (W) which is lowered towards the ground.

16. Beet harvester according to one of claims 1 to 15, **characterised in that** the separating and transfer sections (T, E) extend below the collecting hopper (10) and at the end of the transfer section (E), the harvested crop which has been fed up to that point without having its direction changed can be fed into the hopper (10) by a change of direction.

## Revendications

1. Arracheuse de betteraves automotrice, comprenant un châssis de véhicule (2) présentant un mécanisme de roulement avant et un mécanisme de roulement arrière (3, 4), sur lequel sont prévus une unité déracineuse (9) saisissant les produits de récolte avec des impuretés comme flux de mélange (G), une section de séparation (T) saisissant le flux de mélange (G), disposée en aval de l'unité déracineuse dans le sens de transport et une unité de remise descendant les produits de récolte séparés, de celle-ci dans une trémie collectrice (10) ou similaire, **caractérisée en ce que** le flux de mélange (G) reçu par l'unité déracineuse (9) peut être déplacé sur toute la largeur dans la zone d'une section de séparation (T) et d'une section de remise sans rétrécissement (E) et **en ce que** les produits de récolte (G') peuvent être approchés sans renvoi sur celle-ci de la trémie collectrice (10), les zones partielles formées des sections de séparation et de remise (T, E) étant réalisées avec une largeur de transport (B, C) sensiblement constante.

2. Arracheuse de betteraves selon la revendication 1, **caractérisée en ce qu'**au moins la section de transport (T) présente une largeur de transport (B) correspondant à la largeur de réception (A) en particulier à 6 rangs de l'unité déracineuse (9).

3. Arracheuse de betteraves selon la revendication 1 ou 2, **caractérisée en ce que** les sections de séparation et de remise (T, E) s'étendent en partant du plan de remise en permanence en montée (inclinaison N) et sont disposés sensiblement avant la zone de la trémie collectrice (10).

4. Arracheuse de betteraves selon l'une quelconque des revendications 1 à 3, **caractérisée en ce que** les sections de séparation et de remise (T, E) s'étendent sensiblement au-dessus d'un mécanisme de roulement avant (3) du châssis de véhicule (2 ; 2') et la section de remise (E) est disposée juste avant la trémie collectrice (10).

5. Arracheuse de betteraves selon la revendication 4, **caractérisée en ce que** la trémie collectrice (10) est fixée entre le mécanisme de roulement avant (3) et le mécanisme de roulement arrière (4) sur le châssis de véhicule (2, 2').

6. Arracheuse de betteraves selon l'une quelconque des revendications 1 à 5, **caractérisée en ce qu'**au moins les deux roues motrices avant (12, 13 ; 44) du mécanisme de roulement (3) s'étendent côté bord sous la section de remise (E) et au moins une roue directrice (45 ; 47) prévue sur le mécanisme de roulement arrière (4) est logée sur le châssis de véhicule (2) dans la zone de son plan médian longitudinal (M).

7. Arracheuse de betteraves selon l'une quelconque des revendications 1 à 6, **caractérisée en ce que** celle-ci (1) présente une cabine de conduite (11) en appui au-dessus de la section de séparation (T) en montée en permanence contre le châssis de véhicule (2 ; 2').

8. Arracheuse de betteraves selon l'une quelconque des revendications 1 à 7, **caractérisée en ce que** le châssis de véhicule (2 ; 2') est réalisé comme un châssis central double renforcé par des traverses (27, 29, 40, 41) et présentant deux barres de suspension (24, 25) extérieures parallèles au moins dans la zone du mécanisme de roulement (3) avant.

9. Arracheuse de betteraves selon l'une quelconque des revendications 1 à 8, **caractérisée en ce que** le châssis de véhicule (2 ; 2') présente sur son côté avant (26) en guise de traverse un tube support (27) venant en prise sous la cabine de conduite (11), entre celui-ci et une barre transversale médiane (29) s'étendant dans la zone de l'essieu transversal (28) du mécanisme de roulement avant (3) étant formé un espace libre (30) traversé par la section de séparation et de remise (T, E).

10. Arracheuse de betteraves selon la revendication 8 ou 9, **caractérisée en ce que** le châssis de véhicule (2 ; 2') présente, dans la zone du mécanisme de roulement avant (3), des articulations d'appui (31, 32) respectives reliant celui-ci côté bord aux barres de suspension extérieures et **en ce qu'**en amont de celles-ci, un élément de ressort (33) est articulé entre le châssis de véhicule (2) et le mécanisme de roulement (3).

11. Arracheuse de betteraves selon l'une quelconque des revendications 8 à 10, **caractérisée en ce que** le châssis de véhicule (2) présente, dans la zone derrière la barre transversale médiane (29) délimitant l'espace libre avant (30), des parties de barre (36, 37) inclinées respectivement vers l'intérieur à angle aigu par rapport au plan médian longitudinal (M) et reliées aux barres de suspension extérieures (24, 25), lesquelles parties de barre passent dans des parties de barres longitudinales (38, 39) s'étendant parallèlement vers le mécanisme de roulement arrière (4).

12. Arracheuse de betteraves selon l'une quelconque des revendications 1 à 11, **caractérisé en ce que** les roues d'appui (44, 45) prévues sur le cadre de châssis (2) et/ou des chenilles d'appui (12, 13 ; 46, 47) des mécanismes de roulement (3, 4) présentent une disposition parallèle et/ou les unes derrière les autres, grâce à laquelle le poids de la machine est réparti de manière optimale dans le sol.

13. Arracheuse de betteraves selon l'une quelconque des revendications 1 à 12, **caractérisée en ce que** le mécanisme de roulement arrière (4) présente dans la zone des parties de barres longitudinales (38, 39) arrières réunies par une fourche de guidage (4'), une roue d'appui médiane (47) qui peut rouler dans le sens de la marche (F) sensiblement entre les deux voies de circulation des roues d'appui avant (44, 46).

14. Arracheuse de betteraves selon l'une quelconque des revendications 1 à 13, **caractérisée en ce que** deux roues ou plus (44, 45) ou des chenilles (46, 47) sont prévues sur les deux mécanismes de roulement (3, 4) du châssis (2).

15. Arracheuse de betteraves selon l'une quelconque des revendications 1 à 14, **caractérisée en ce que** le cadre de châssis (2) présente un contour abaissé côté sol (W) dans la zone des parties de barres longitudinales (38 ; 43) prévues entre le mécanisme de roulement avant et arrière (3, 4).

16. Arracheuse de betteraves selon l'une quelconque des revendications 1 à 15, **caractérisée en ce que** les sections de séparation et de remise (T, E) s'étendent sous la trémie collectrice (10) et **en ce que** les produits de récolte peuvent être introduits à la fin de la section de remise (E) approchée sans renvoi, en étant renvoyés dans la trémie (10).
